# EUROPEAN PATENT APPLICATION

(11) **EP 4 759 958 A1**
(43) Date of publication of application: **17.06.2026**
(21) Application number: 24854318.3
(22) Date of filing: 12.07.2024
(51) Int. Cl.: C22C 38/02, C22C 38/04, C22C 38/06, C21D 8/12, H01F 1/147

(54) **NON-ORIENTED ELECTRICAL STEEL SHEET AND METHOD FOR MANUFACTURING SAME**

(30) Priority: 11.08.2023 KR 20230105609
(71) Applicant: Hyundai Steel Company, Incheon 22525 (KR)
(72) Inventor: OH, Gyu Jin, Incheon 22525 (KR); KANG, Chun Ku, Incheon 22525 (KR)
(74) Representative: Viering, Jentschura & Partner mbB Patent- und Rechtsanwälte
(86) International application number: PCT/KR2024/010039
(87) International publication number: WO 2025/037766

(57) **Abstract**

The present disclosure relates to a non-oriented electrical steel sheet and a method for manufacturing the same. According to the non-oriented electrical steel sheet and the method for manufacturing the same of the present disclosure, deformation of the steel sheet during heat treatment can be minimized to suppress an increase in iron loss, and thus excellent magnetic properties can be achieved.

## Description

### [TECHNICAL FIELD]

The present disclosure relates to a non-oriented electrical steel sheet and a method for manufacturing the same.

### [BACKGROUND]

In recent years, due to CO₂ emission reduction policies for preventing global warming, existing internal combustion engine vehicles are rapidly being replaced by eco-friendly vehicles such as hybrid electric vehicles (HEVs) and particularly electric vehicles (EVs). In accordance with the increase in demand for such electric vehicles, high efficiency in energy conversion of driving motors for electric vehicles has been pursued, and for this purpose, excellent magnetic properties of a non-oriented electrical steel sheet, which is a motor core material, are required.

In particular, a non-oriented electrical steel sheet having low high-frequency (400 Hz) iron loss is required for improving motor efficiency during high-speed driving in which energy loss is large. To meet such requirements, product development of non-oriented electrical steel sheets has been carried out by increasing a Si content or adjusting a product thickness to be thin.

As described above, as a required thickness becomes thin, a problem arises in that a manufacturing difficulty of the non-oriented electrical steel sheet increases. In addition, due to such thin rolling, sheet breakage occurs, thereby reducing a production yield, and a thin steel sheet is deformed during heat treatment, resulting in an increase in iron loss.

In order to solve this, Patent Document 1 (Korean Patent Application Publication No. 2015-0185060) has proposed a method of reducing tension applied to a steel sheet by controlling a speed difference between an entry side and an exit side for the steel sheet passing through a final annealing furnace. However, even if the tension is reduced by controlling a speed difference between the entry side and the exit side for the steel sheet passing through the final annealing furnace, deformation significantly generated inside crystal grains could not be suppressed. Therefore, a non-oriented electrical steel sheet and a method for manufacturing the same, which solve such problems and have excellent magnetic properties, are required.

### [DISCLOSURE]

### [TECHNICAL PROBLEM]

An object of the present disclosure is to provide a non-oriented electrical steel sheet and a method for manufacturing the same, which have excellent magnetic properties by minimizing deformation of a steel sheet during heat treatment to suppress an increase in iron loss.

### [TECHNICAL SOLUTION]

In order to solve the above object, the non-oriented electrical steel sheet of the present disclosure is a non-oriented electrical steel sheet manufactured by performing hot rolling, cold rolling, and final annealing after reheating a slab containing, in weight percent, Si in an amount of 3.0% or more and 3.8% or less, Mn in an amount of 0.2% or more and 0.5% or less, and Al in an amount of 0.5% or more and 1.5% or less, and the remainder being Fe and other unavoidable impurities; and when a crystal orientation is measured in an area of 1000 µm × 1000 µm or more by using electron backscatter diffraction (EBSD), an average value of Kernel Average Misorientation (KAM) values of respective measurement points present in a measurement area is 0.4° or less.

The final annealing may be performed while a cold-rolled steel sheet cold-rolled through a hearth roll having a surface roughness (Ra) of 0.1 µm or more and 0.2 µm or less is moved.

In addition, the final annealing may be performed while a cold-rolled steel sheet cold-rolled through a hearth roll having a friction coefficient of 0.05 or more and 0.2 or less is moved.

In addition, the final annealing may be performed while a cold-rolled steel sheet cold-rolled under a tension of 10 MPa or less is moved.

In addition, the slab may further contain, in weight percent, one or more selected from Sn in an amount of 0.04% or less, Sb in an amount of 0.04% or less, C in an amount of 0.003% or less, S in an amount of 0.002% or less, P in an amount of 0.015% or less, N in an amount of 0.002% or less, and Ti in an amount of 0.002% or less.

In addition, the non-oriented electrical steel sheet may have an iron loss of 2.0 W/kg or less in W_{15/50}, an iron loss of 12.0 W/kg or less in W_{10/400}, and a magnetic flux density (B₅₀) of 1.63 T or more.

In addition, a method for manufacturing the non-oriented electrical steel sheet of the present disclosure includes performing hot rolling after reheating a slab containing, in weight percent, Si in an amount of 3.0% or more and 3.8% or less, Mn in an amount of 0.2% or more and 0.5% or less, and Al in an amount of 0.5% or more and 1.5% or less, and the remainder being Fe and other unavoidable impurities; manufacturing a cold-rolled steel sheet by cold rolling; and final annealing the cold-rolled steel sheet, wherein when a crystal orientation is measured in an area of 1000 µm × 1000 µm or more by using electron backscatter diffraction (EBSD), an average value of Kernel Average Misorientation (KAM) values of respective measurement points present in a measurement area is 0.4° or less.

In addition, the step of final annealing may be performed while the cold-rolled steel sheet is moved through a hearth roll having a surface roughness (Ra) of 0.1 µm or more and 0.2 µm or less.

In addition, the step of final annealing may be performed while the cold-rolled steel sheet is moved through a hearth roll having a friction coefficient of 0.05 or more and 0.2 or less.

In addition, a tension applied to the cold-rolled steel sheet in the step of final annealing may be 10 MPa or less.

### [EFFECTS OF THE DISCLOSURE]

According to the non-oriented electrical steel sheet and the method for manufacturing the same of the present disclosure, deformation of a steel sheet during heat treatment may be minimized to suppress an increase in iron loss, thereby providing a non-oriented electrical steel sheet having excellent magnetic properties.

### [BRIEF DESCRIPTION OF DRAWINGS]

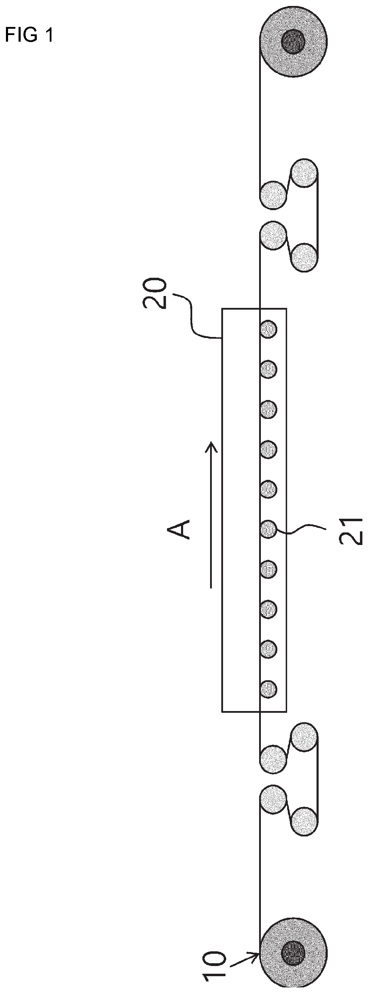

FIG. 1 is a drawing exemplarily illustrating a process in which a cold-rolled steel sheet passes through a final annealing furnace in order to describe a step of final annealing according to an embodiment of the present disclosure.

### [DETAILED DESCRIPTION]

The present disclosure relates to a non-oriented electrical steel sheet, which is a motor core material used in a motor for converting electrical energy into mechanical energy. The non-oriented electrical steel sheet is a non-oriented electrical steel sheet manufactured by performing hot rolling, cold rolling, and final annealing after reheating a slab containing, in weight percent, Si in an amount of 3.0% or more and 3.8% or less, Mn in an amount of 0.2% or more and 0.5% or less, and Al in an amount of 0.5% or more and 1.5% or less, and the remainder being Fe and other unavoidable impurities; and when a crystal orientation is measured in an area of 1000 µm × 1000 µm or more by using electron backscatter diffraction (EBSD) and analyzed by using OIM software, an average value of Kernel Average Misorientation (KAM) values of respective measurement points present in a measurement area is 0.4° or less. Specifically, an average value of KAM values of respective measurement points evaluated by the above-described method may be 0.39° or less. Here, the KAM value of the measurement point to be measured means an average value of crystal orientation differences between the measurement point to be measured and around the measurement point to be measured. The average value of the crystal orientation differences between the measurement point to be measured and around the measurement point to be measured means an average value of orientation differences between each hexagonal pixel (the measurement point to be measured) among measurement data and six adjacent pixels (first approximation), twelve outer pixels (second approximation), and eighteen outer pixels (third approximation). In one embodiment, the average value of the KAM values evaluated by the above-described method may be evaluated by the third approximation.

According to the non-oriented electrical steel sheet of the present disclosure, deformation of a steel sheet during heat treatment may be minimized to suppress an increase in iron loss, and thus magnetic properties may be excellent.

For example, the non-oriented electrical steel sheet may have an iron loss of 2.0 W/kg or less in W_{15/50}, an iron loss of 12.0 W/kg or less in W_{10/400}, and a magnetic flux density (B₅₀) of 1.63 T or more. Specifically, the non-oriented electrical steel sheet may have an iron loss of 1.99 W/kg or less or 1.98 W/kg or less in W_{15/50}, and an iron loss of 11.9 W/kg or less or 11.8 W/kg or less in W_{10/400}. The non-oriented electrical steel sheet is not particularly limited in lower limits of the iron loss W_{15/50} and W_{10/400} in that lower iron loss W_{15/50} and W_{10/400} indicates better magnetic properties, and the iron loss W_{15/50} and W_{10/400} may be, for example, greater than 0 W/kg and 5 W/kg or more, respectively. In addition, the non-oriented electrical steel sheet is not particularly limited in an upper limit of the magnetic flux density (B₅₀) in that higher magnetic flux density (B₅₀) indicates better magnetic properties, and the magnetic flux density (B₅₀) may be, for example, 1.75 T or less. The non-oriented electrical steel sheet may have excellent magnetic properties by having the above-described average value of the KAM values. The iron loss W_{15/50} is a low-frequency iron loss when a magnetic flux density of 1.5 T is induced at a low frequency of 50 Hz, and the iron loss W_{10/400} is a high-frequency iron loss when a magnetic flux density of 1.0 T is induced at a high frequency of 400 Hz, and the magnetic flux density (B₅₀) means a magnetic flux density induced in a magnetic field of 5000 A/m. Here, the iron loss and magnetic flux density were measured according to the IEC 60404 2 standard.

Components of the slab used in manufacturing the non-oriented electrical steel sheet are described below.

### Si: 3.0 wt% or more and 3.8 wt% or less

Silicon (Si) is an element that increases electrical resistivity of a material to reduce iron loss. When the silicon is contained in the slab in an amount less than the lower limit of the above-described range, an effect of reducing iron loss may be insufficient. In addition, when the silicon is contained in the slab in an amount exceeding the upper limit of the above-described range, cold rollability and punchability may be degraded. Therefore, the silicon may be contained in the slab in an amount of 3.0 wt% or more and 3.8 wt% or less, and specifically, may be contained in an amount of 3.0 wt% or more and 3.5 wt% or less.

### Mn: 0.2 wt% or more and 0.5 wt% or less

Manganese (Mn) is an element that increases electrical resistivity to reduce iron loss and forms MnS sulfide with sulfur (S). When the manganese is contained in the slab in an amount exceeding the upper limit of the above-described range, the MnS may be finely precipitated to increase iron loss. Therefore, the manganese may be contained in the slab in an amount of 0.2 wt% to 0.5 wt%, and specifically, may be contained in an amount of 0.2 wt% to 0.4 wt%.

### Al: 0.5 wt% or more and 1.5 wt% or less

Aluminum (Al) is an element that increases electrical resistivity to reduce iron loss and forms AIN nitride with nitrogen (N). When the aluminum is contained in the slab in an amount less than the lower limit of the above-described range, electrical resistivity may be insufficient, thereby increasing iron loss. In addition, when the aluminum is contained in the slab in an amount exceeding the upper limit of the above-described range, problems such as nozzle clogging may occur during a continuous casting process. Therefore, the aluminum may be contained in the slab in an amount of 0.5 wt% or more and 1.5 wt% or less, and specifically, may be contained in an amount of 0.6 wt% or more and 1.3 wt% or less, 0.7 wt% or more and 1.1 wt% or less, or 0.8 wt% or more and 1.0 wt% or less.

### Remainder Fe and other unavoidable impurities

The unavoidable impurities are impurities introduced during a steelmaking process and a manufacturing process of the non-oriented electrical steel sheet, and since these are widely known in the art, a detailed description thereof is omitted. In an embodiment of the present disclosure, addition of elements other than the above-described components of the steel sheet material is not excluded, and various elements may be included within a range not impairing the technical spirit of the present disclosure. Additional elements, when further included, may be included by replacing the remainder iron (Fe).

For example, the unavoidable impurities may be boron (B) and/or zirconium (Zr) and the like, and the steel sheet material may contain B in an amount of 0.002 wt% or less and/or Zr in an amount of 0.005 wt% or less.

In one example, the slab may further contain, in weight percent, one or more selected from Sn in an amount of 0.04% or less, Sb in an amount of 0.04% or less, C in an amount of 0.003% or less, S in an amount of 0.002% or less, P in an amount of 0.015% or less, N in an amount of 0.002% or less, and Ti in an amount of 0.002% or less.

### Sn: 0.04 wt% or less

Tin (Sn) is an element that is enriched on a surface of a steel sheet as a surface precipitation element and serves to reduce iron loss by suppressing adsorption of nitrogen and formation of nitride. When the tin is contained in the slab in an amount exceeding the upper limit of the above-described range, grain boundaries may be embrittled, thereby deteriorating fatigue resistance. Therefore, the tin may be contained in the slab in an amount of 0.04 wt% or less.

### Sb: 0.04 wt% or less

Antimony (Sb) is an element that is enriched on a surface of a steel sheet as a surface precipitation element and serves to reduce iron loss by suppressing adsorption of nitrogen and formation of nitride. When the antimony is contained in the slab in an amount exceeding the upper limit of the above-described range, grain boundaries may be embrittled, thereby deteriorating fatigue resistance. Therefore, the antimony may be contained in the slab in an amount of 0.04 wt% or less.

### C: 0.003 wt% or less

Carbon (C) is an element that may form carbide by combining with other unavoidable impurities and may adversely affect magnetic properties. Therefore, the carbon may be contained in the slab in an amount of 0.003 wt% or less.

### S: 0.002 wt% or less

Sulfur (S) is an element that may form sulfide by combining with other unavoidable impurities and may adversely affect magnetic properties. Therefore, the sulfur may be contained in the slab in an amount of 0.002 wt% or less.

### P: 0.015 wt% or less

Phosphorus (P) is an element that not only increases electrical resistivity of a material but also segregates at grain boundaries to improve a crystallographic texture and thereby increase electrical resistivity and reduce iron loss; however, when the phosphorus is contained in the slab in an amount exceeding the upper limit of the above-described range, it may cause formation of a crystallographic texture unfavorable to magnetic properties and therefore may not provide an effect of improving the crystallographic texture, and the phosphorus may be excessively segregated at grain boundaries to deteriorate rollability and workability, thereby making production difficult. Therefore, the phosphorus may be contained in an amount of 0.015 wt% or less.

### N: 0.002 wt% or less

Nitrogen (N) is an element that may form nitride by combining with other unavoidable impurities and may adversely affect magnetic properties. Therefore, the nitrogen may be contained in the slab in an amount of 0.002 wt% or less.

### Ti: 0.002 wt% or less

Titanium (Ti) is an element that has a very strong tendency to form precipitates in the non-oriented electrical steel sheet and deteriorates iron loss by forming fine carbide, nitride, or sulfide inside the non-oriented electrical steel sheet to suppress grain growth. Therefore, the titanium may be contained in the slab in an amount of 0.002 wt% or less.

In one example, the non-oriented electrical steel sheet may further include a coating layer. The coating layer is a coating formed on a surface of the non-oriented electrical steel sheet and may be referred to as an insulating film. Since the insulating film is widely known in the art, a detailed description thereof is omitted. For example, the coating layer may be formed by applying a chromium-free coating solution, that is, an organic-inorganic composite coating solution containing no chromium, on a surface of the steel sheet that has undergone final annealing and then baking the coating solution. At this time, the coating layer may be formed to have a thickness of 0.1 µm or more and 5 µm or less. The non-oriented electrical steel sheet may reduce eddy current loss by further including the coating layer formed on the surface of the non-oriented electrical steel sheet so as to maintain insulation between upper and lower non-oriented electrical steel sheets when a plurality of the non-oriented electrical steel sheets are stacked.

The present disclosure also relates to a method for manufacturing the non-oriented electrical steel sheet.

The method for manufacturing the non-oriented electrical steel sheet of the present disclosure includes performing hot rolling, manufacturing a cold-rolled steel sheet, and performing final annealing. The non-oriented electrical steel sheet manufactured by the method for manufacturing the non-oriented electrical steel sheet of the present disclosure has an average value of Kernel Average Misorientation (KAM) values of 0.4° or less for respective measurement points present in a measurement area of 1000 µm × 1000 µm or more, when a crystal orientation is measured in the area by using electron backscatter diffraction (EBSD) and analyzed by using OIM software.

According to the method for manufacturing the non-oriented electrical steel sheet of the present disclosure, deformation of a steel sheet during heat treatment may be minimized to suppress an increase in iron loss, thereby manufacturing a non-oriented electrical steel sheet having excellent magnetic properties.

The step of performing hot rolling is a step for manufacturing a hot-rolled steel sheet from a slab and is performed by performing hot rolling after reheating the slab. Specifically, reheating the slab is to raise the slab to a temperature at which the slab can be rolled and is performed before performing hot rolling on the slab. A reheating temperature of the slab is not particularly limited but may be, for example, 1000°C to 1150°C. If the reheating temperature of the slab is less than the lower limit of the above-described range, it is not easy to perform hot rolling, and if the reheating temperature exceeds the upper limit of the above-described range, coarsely precipitated aluminum nitride (AIN) may be re-dissolved and then finely re-precipitated in a subsequent process, thereby increasing iron loss.

In one example, the slab may contain, in weight percent, Si in an amount of 3.0% or more and 3.8% or less, Mn in an amount of 0.2% or more and 0.5% or less, and Al in an amount of 0.5% or more and 1.5% or less, and the remainder may include Fe and other unavoidable impurities. Since a detailed description of the composition of the slab is the same as that described above regarding the non-oriented electrical steel sheet, the description thereof will be omitted.

In another example, the slab may further contain, in weight percent, one or more selected from Sn in an amount of 0.04% or less, Sb in an amount of 0.04% or less, C in an amount of 0.003% or less, S in an amount of 0.002% or less, P in an amount of 0.015% or less, N in an amount of 0.002% or less, and Ti in an amount of 0.002% or less. Since a detailed description of the composition of the slab is the same as that described above regarding the non-oriented electrical steel sheet, the description thereof will be omitted.

The step of performing hot rolling is performed to manufacture a hot-rolled steel sheet from the reheated slab. A thickness of the hot-rolled steel sheet may be 1.6 mm to 2.3 mm. In addition, a finishing rolling temperature during the hot rolling may be 800°C to 1000°C and specifically may be 800°C to 900°C. The hot rolling may be performed under the above-described conditions, thereby being advantageous in terms of passing ability and control of a crystallographic texture.

In one example, the method for manufacturing the non-oriented electrical steel sheet may further include a step of coiling. The step of coiling may be performed by coiling the hot-rolled steel sheet obtained by the hot rolling at a temperature of 600°C or less and specifically may be performed by coiling at 500°C to 600°C. If a coiling temperature of the hot-rolled steel sheet is less than the lower limit of the above-described range, brittleness may increase and sheet breakage may occur during coiling. In addition, if the coiling temperature of the hot-rolled steel sheet exceeds the upper limit of the above-described range, fine aluminum nitride (AIN) may be formed during cooling, thereby increasing iron loss.

In another example, the method for manufacturing the non-oriented electrical steel sheet may further include a step of annealing the hot-rolled steel sheet. The step of annealing the hot-rolled steel sheet is a step for increasing a crystallographic orientation favorable to magnetic properties and may be performed by increasing a temperature to 900°C to 1100°C at a heating rate of 10°C/s or more under an atmosphere containing 80% or more nitrogen, maintaining the temperature within this range for 30 seconds to 90 seconds, and then cooling at a cooling rate of 20°C/s or more. If temperature and time conditions during annealing of the hot-rolled steel sheet are less than the lower limits of the above-described conditions, grain growth may not occur or may occur only slightly, making it difficult to obtain a crystallographic texture favorable to magnetic properties during annealing after cold rolling. In addition, if temperature and time conditions during annealing of the hot-rolled steel sheet exceed the upper limits of the above-described conditions, abnormal grain growth may excessively occur and surface defects of the sheet may excessively occur. Thereafter, the annealed hot-rolled steel sheet may further undergo pickling.

The step of manufacturing the cold-rolled steel sheet is a step for manufacturing a cold-rolled steel sheet from the hot-rolled steel sheet and is performed through cold rolling. A thickness of the cold-rolled steel sheet may be 0.10 mm to 0.30 mm and specifically may be 0.15 mm to 0.30 mm. In addition, a reduction ratio during the cold rolling may be 80% or more and specifically may be 84% to 94%.

Hereinafter, a step of performing final annealing will be described with reference to the accompanying drawings, and the accompanying drawings are merely illustrative, and the step of performing final annealing is not limited to the accompanying drawings.

The step of performing final annealing is a step for securing magnetic properties by growing grains to a specific size and is performed by heat-treating the cold-rolled steel sheet. FIG. 1 is a drawing exemplarily illustrating a process in which a cold-rolled steel sheet passes through a final annealing furnace in order to describe a step of final annealing according to an embodiment of the present disclosure. As shown in FIG. 1, the step of performing final annealing may be performed by passing the cold-rolled steel sheet 10, which has been cold-rolled, through the final annealing furnace 20 while moving the cold-rolled steel sheet 10 through a hearth roll 21. For example, the final annealing may be performed by increasing a temperature to 950°C to 1100°C at a heating rate of 10°C/s or more, maintaining the temperature for 30 seconds to 90 seconds, and then cooling at a cooling rate of 10°C/s or more. The step of performing final annealing may be performed within the above-described ranges of the heating rate, temperature, time, and cooling rate, thereby reducing iron loss and deriving an optimal grain size in consideration of mechanical properties. In contrast, if temperature and time during the step of performing final annealing exceed the upper limits of the above-described ranges, a grain size may become coarse and eddy current loss may increase. In addition, if a heating rate, temperature, time, and cooling rate during the step of performing final annealing are less than the lower limits of the above-described ranges, a grain size may become fine and hysteresis loss may increase.

At this time, the final annealing may be performed under an atmosphere of 80% or more hydrogen and the remainder nitrogen. The final annealing may be performed under the above-described atmosphere, thereby preventing oxidation and nitriding of a surface of the non-oriented electrical steel sheet. In contrast, if an atmosphere during the final annealing is less than the above-described hydrogen fraction range, nitrogen may penetrate a surface of the cold-rolled steel sheet and form nitride, thereby increasing iron loss.

In one example, the step of performing final annealing may be performed by moving the cold-rolled steel sheet through a hearth roll having a surface roughness (Ra) of 0.1 µm or more and 0.2 µm or less. Specifically, the surface roughness (Ra) of the hearth roll may be 0.1 µm or more and 0.18 µm or less. The step of performing final annealing may be performed by moving the cold-rolled steel sheet through the hearth roll having the above-described surface roughness (Ra), thereby reducing tension applied to the cold-rolled steel sheet moved during the final annealing and suppressing grain deformation of the steel sheet, and thus the manufactured non-oriented electrical steel sheet may have excellent magnetic properties. In contrast, if the surface roughness (Ra) of the hearth roll is less than the lower limit of the above-described range, the cold-rolled steel sheet may not move and slip may occur, thereby making production of the non-oriented electrical steel sheet impossible. In addition, if the surface roughness (Ra) of the hearth roll exceeds the upper limit of the above-described range, tension applied to the cold-rolled steel sheet may increase, thereby increasing iron loss of the manufactured non-oriented electrical steel sheet.

In another example, the step of performing final annealing may be performed while moving the cold-rolled steel sheet through a hearth roll having a friction coefficient of 0.05 or more and 0.2 or less and specifically 0.06 or more and 0.19 or less. If the friction coefficient of the hearth roll is less than the lower limit of the above-described range, the cold-rolled steel sheet may not move and slip may occur, thereby making production of the non-oriented electrical steel sheet impossible. In addition, if the friction coefficient of the hearth roll exceeds the upper limit of the above-described range, tension applied to the cold-rolled steel sheet may increase, thereby increasing iron loss of the manufactured non-oriented electrical steel sheet. Specifically, the hearth roll may have the above-described surface roughness (Ra) and at the same time may have the above-described friction coefficient. The step of performing final annealing may be performed while moving the cold-rolled steel sheet through the hearth roll having the above-described surface roughness (Ra) and friction coefficient, thereby reducing tension applied to the cold-rolled steel sheet moved during the final annealing and suppressing grain deformation of the steel sheet, and thus the manufactured non-oriented electrical steel sheet may have excellent magnetic properties.

For example, tension applied to the cold-rolled steel sheet during the step of performing final annealing may be 10 MPa or less. Specifically, tension applied to the cold-rolled steel sheet during the step of performing final annealing may be 9.5 MPa or less. In addition, a lower limit of tension applied to the cold-rolled steel sheet during the step of performing final annealing may be 4 MPa or more and specifically may be 5 MPa or more. By applying the above-described tension to the cold-rolled steel sheet during the step of performing final annealing, the manufactured non-oriented electrical steel sheet may have excellent magnetic properties.

In one example, the method for manufacturing the non-oriented electrical steel sheet may further include a step of forming a coating layer. The step of forming the coating layer may be performed on a surface of the steel sheet that has undergone final annealing, and specifically may be performed by forming the coating layer on a surface of the steel sheet that has been heat-treated during the final annealing. Since a detailed description of the coating layer is the same as that described above regarding the non-oriented electrical steel sheet, the description thereof will be omitted.

Hereinafter, the present disclosure will be described in more detail through embodiments according to the present disclosure and comparative examples not according to the present disclosure; however, the scope of the present disclosure is not limited to the embodiments presented below.

### Embodiment 1

### Manufacture of non-oriented electrical steel sheet

A hot-rolled steel sheet having a thickness of 2 mm was manufactured by reheating the slab at 1100°C and then performing hot rolling at a finishing temperature of 850°C after manufacturing a slab by steelmaking and continuous casting using components shown in Table 1 below and the remainder being Fe and other unavoidable impurities.

Thereafter, the hot-rolled steel sheet was coiled at a coiling temperature of 580°C.

Thereafter, the hot-rolled steel sheet was annealed by increasing a temperature to 1000°C at a heating rate of 20°C/s under an atmosphere of 100% nitrogen, maintaining the temperature at 1000°C for 60 seconds, and then cooling at a cooling rate of 30°C/s.

Thereafter, the annealed hot-rolled steel sheet was cold-rolled at a reduction ratio of 87.5% to manufacture a cold-rolled steel sheet having a thickness of 0.25 mm.

Thereafter, the cold-rolled steel sheet was moved through a hearth roll shown in Table 1 below and passed through a final annealing furnace, and final annealing was performed under an atmosphere of 100% hydrogen by increasing a temperature to 1050°C at a heating rate of 20°C/s, maintaining the same temperature for 60 seconds, and then cooling at a cooling rate of 20°C/s, thereby manufacturing the non-oriented electrical steel sheet.

**[Table 1]**

| Slab Composition (wt%) | | | | | | | | |
|---|---|---|---|---|---|---|---|---|
| Si | Mn | Al | Sn | C | S | P | N | Ti |
| 3.3 | 0.3 | 0.9 | 0.0350 | 0.0021 | 0.0017 | 0.0082 | 0.0017 | 0.0015 |

### Embodiments 2 to 6 and Comparative examples 1 to 2

### Manufacture of non-oriented electrical steel sheet

Non-oriented electrical steel sheets were manufactured in the same manner as in Embodiment 1, except that hearth rolls were changed as shown in Table 2 below during final annealing.

**[Table 2]**

| | Final thickness of non-oriented electrical steel sheet (mm) | Surface roughness (Ra) of hearth roll | Friction coefficient of hearth roll |
|---|---|---|---|
| Embodiment 1 | 0.25 | 0.1 | 0.1 |
| Embodiment 2 | | 0.13 | 0.1 |
| Embodiment 3 | | 0.18 | 0.1 |
| Embodiment 4 | | 0.13 | 0.06 |
| Embodiment 5 | | 0.13 | 0.15 |
| Embodiment 6 | | 0.13 | 0.19 |
| Comparative example 1 | | 0.22 | 0.1 |
| Comparative example 2 | | 0.13 | 0.22 |

### Evaluation example 1. Tension evaluation

During final annealing in each of the Embodiments and Comparative examples, a degree of bending of the cold-rolled steel sheet passing through the final annealing furnace was measured to evaluate tension applied to the cold-rolled steel sheet, and the results were shown in Table 3 below.

### Evaluation example 2. Evaluation of average KAM value

A crystal orientation was measured in an area of 1000 µm × 1000 µm or more for the non-oriented electrical steel sheets manufactured in each of the Embodiments and Comparative examples by using electron backscatter diffraction (EBSD), and an average value of Kernel Average Misorientation (KAM) values of respective measurement points present in a measurement area analyzed by using OIM software was evaluated, and the results were shown in Table 3 below.

### Evaluation example 3. Evaluation of iron loss and magnetic flux density

Iron loss and magnetic flux density were measured for the non-oriented electrical steel sheets respectively manufactured in the Embodiments and Comparative examples according to a method described in IEC 60404 2, and their average values were shown in Table 3 below. Here, W_{15/50} is a low-frequency iron loss when a magnetic flux density of 1.5 T is induced at a low frequency of 50 Hz, W_{10/400} is a high-frequency iron loss when a magnetic flux density of 1.0 T is induced at a high frequency of 400 Hz, and B₅₀ means a magnetic flux density induced in a magnetic field of 5000 A/m.

**[Table 3]**

| | Tension | Average KAM value (°) | W_{15/50}(W/kg) | W_{10/400}(W/kg) | B50 |
|---|---|---|---|---|---|
| Embodiment 1 | 5.2 | 0.21 | 1.91 | 11.4 | 1.65 |
| Embodiment 2 | 6.2 | 0.30 | 1.95 | 11.5 | 1.64 |
| Embodiment 3 | 8.1 | 0.39 | 1.95 | 11.8 | 1.63 |
| Embodiment 4 | 5.8 | 0.24 | 1.93 | 11.5 | 1.65 |
| Embodiment 5 | 7.9 | 0.35 | 1.95 | 11.6 | 1.65 |
| Embodiment 6 | 9.2 | 0.39 | 1.98 | 11.7 | 1.65 |
| Comparative example 1 | 11.5 | 0.49 | 2.10 | 12.3 | 1.62 |
| Comparative example 2 | 10.9 | 0.45 | 2.08 | 12.2 | 1.63 |

As shown in Table 3, it was confirmed that the non-oriented electrical steel sheets manufactured in each of Embodiments 1 to 6 have small tension applied to the hot-rolled steel sheet during final annealing and, as a result, have small average values of Kernel Average Misorientation (KAM) values and have low iron loss and high magnetic flux density.

In contrast, it was confirmed that the non-oriented electrical steel sheets manufactured in each of Comparative examples 1 and 2 had large tension applied to the hot-rolled steel sheet during final annealing and, as a result, had large average values of Kernel Average Misorientation (KAM) values as well as high iron loss and low magnetic flux density.

### <Description of reference numerals>

10: cold-rolled steel sheet
20: final annealing furnace
21: hearth roll
A: traveling direction of the cold-rolled steel sheet

## Claims

1. A non-oriented electrical steel sheet manufactured by performing hot rolling, cold rolling, and final annealing after reheating a slab containing, in weight percent, Si in an amount of 3.0% or more and 3.8% or less, Mn in an amount of 0.2% or more and 0.5% or less, and Al in an amount of 0.5% or more and 1.5% or less, and the remainder being Fe and other unavoidable impurities,
wherein, when a crystal orientation is measured in an area of 1000 µm × 1000 µm or more by using electron backscatter diffraction (EBSD), an average value of Kernel Average Misorientation (KAM) values of respective measurement points present in the measurement area is 0.4° or less.

2. The non-oriented electrical steel sheet according to claim 1,
wherein the final annealing is performed while a cold-rolled steel sheet obtained through cold rolling is moved through a hearth roll having a surface roughness (Ra) of 0.1 µm or more and 0.2 µm or less.

3. The non-oriented electrical steel sheet according to claim 1,
wherein the final annealing is performed while a cold-rolled steel sheet obtained through cold rolling is moved through a hearth roll having a friction coefficient of 0.05 or more and 0.2 or less.

4. The non-oriented electrical steel sheet according to claim 1,
wherein the final annealing is performed while a cold-rolled steel sheet obtained through cold rolling is moved under a tension of 10 MPa or less.

5. The non-oriented electrical steel sheet according to claim 1,
wherein the slab further contains, in weight percent, one or more selected from the group consisting of Sn in an amount of 0.04% or less, Sb in an amount of 0.04% or less, C in an amount of 0.003% or less, S in an amount of 0.002% or less, P in an amount of 0.015% or less, N in an amount of 0.002% or less, and Ti in an amount of 0.002% or less.

6. The non-oriented electrical steel sheet according to claim 1,
wherein iron loss W_{15/50} is 2.0 W/kg or less, iron loss W_{10/400} is 12.0 W/kg or less, and magnetic flux density (B₅₀) is 1.63 T or more.

7. A method for manufacturing a non-oriented electrical steel sheet, comprising:
performing hot rolling after reheating a slab containing, in weight percent, Si in an amount of 3.0% or more and 3.8% or less, Mn in an amount of 0.2% or more and 0.5% or less, and Al in an amount of 0.5% or more and 1.5% or less, and the remainder being Fe and other unavoidable impurities;
manufacturing a cold-rolled steel sheet by cold rolling; and
performing final annealing on the cold-rolled steel sheet;
wherein, when a crystal orientation is measured in an area of 1000 µm × 1000 µm or more by using electron backscatter diffraction (EBSD), an average value of Kernel Average Misorientation (KAM) values of respective measurement points present in the measurement area is 0.4° or less.

8. The method for manufacturing a non-oriented electrical steel sheet according to claim 7,
wherein the step of performing final annealing is performed while moving the cold-rolled steel sheet through a hearth roll having a surface roughness (Ra) of 0.1 µm or more and 0.2 µm or less.

9. The method for manufacturing a non-oriented electrical steel sheet according to claim 7,
wherein the step of performing final annealing is performed while moving the cold-rolled steel sheet through a hearth roll having a friction coefficient of 0.05 or more and 0.2 or less.

10. The method for manufacturing a non-oriented electrical steel sheet according to claim 7,
wherein tension applied to the cold-rolled steel sheet during the step of performing final annealing is 10 MPa or less.
